# EUROPÄISCHE PATENTSCHRIFT

(11) **EP 2 841 229 B1**
(45) Veröffentlichungstag und Bekanntmachung des Hinweises auf die Patenterteilung: **22.06.2022**
(21) Anmeldenummer: 13720873.2
(22) Anmeldetag: 26.04.2013
(51) Int. Cl.: B23K 11/31

(54) **FÜGEN VON BAUTEILEN MITTELS EINES WIDERSTANDSSCHWEIßENS**
JOINING COMPONENTS BY MEANS OF RESISTANCE WELDING
ASSEMBLAGE DE PIÈCES PAR SOUDAGE PAR RÉSISTANCE

(30) Priorität: 28.04.2012 DE 102012008831
(43) Veröffentlichungstag der Anmeldung: 04.03.2015
(73) Patentinhaber: Volkswagen Aktiengesellschaft, 38440 Wolfsburg (DE)
(72) Erfinder: VOIGT, Alexander, 04683 Naunhof (DE); GRAUL, Matthias, 38465 Brome (DE)
(86) Internationale Anmeldenummer: PCT/EP2013/058693
(87) Internationale Veröffentlichungsnummer: WO 2013/160430

(56) Entgegenhaltungen:
- EP-A1- 0 418 395
- EP-A2- 0 037 391
- WO-A1-2004/062912
- DE-C- 672 682
- DE-U1- 29 614 518
- JP-A- H10 230 370
- JP-A- 2001 259 851
- JP-U- S61 143 775
- US-A- 1 189 584
- US-A- 5 285 043

## Beschreibung

Die Erfindung betrifft eine Schweißvorrichtung zum Fügen von Bauteilen mittels eines Widerstandsschweißens, sowie ein mittels der Schweißvorrichtung durchführbares Verfahren, gemäß dem Oberbegriff der Ansprüche 1 und 9 (siehe z.B. US 1 189584, EP 0 037 391 oder DE 296 14 518 U).

Das Widerstandsschweißen gehört aufgrund von Bestrebungen zur Automatisierung zu häufig anzutreffenden Fügeverfahren im Karosseriebau. Es sind Roboterschweißzangen bekannt, die für eine Anfahrposition und einen Arbeitstakt einen Schweißpunkt erzeugen. Dies führt bei großen Bauteilen mit langen Punktreihen zu vergleichsweise großen Taktzeiten und/oder einer Notwendigkeit von mehreren Schweißstationen. Für eine Steigerung einer Produktivität ist es bekannt, Schweißzangen zu verwenden, die je Anfahrposition und Arbeitstakt zwei Schweißpunkte einbringen können. Die DE 10 2006 005 920 A1 beschreibt ein Widerstandsschweißverfahren zum Verschweißen von drei Bauteilen. Ein Bauteil muss als Hohlprofil ausgeführt sein. Der Schweißstrom wird von zwei Elektroden eingeleitet. Außerdem sind weitere Verfahren bekannt, bei denen ein indirektes Doppelpunktschweißen erfolgt, wobei diese bei einer einseitigen Zugängigkeit angewendet werden können. Für das Doppelpunktverfahren sind Vorrichtungen bekannt, die zwei nebeneinander angeordnete Schweißelektroden aufweisen. Dabei ist es insbesondere bekannt, die Schweißelektroden in einer Längsrichtung zu versetzen, insbesondere um unterschiedlich dicke Blechstapel zu fügen. Außerdem sind Schweißvorrichtungen bekannt, bei denen zwei parallel zueinander angeordnete Schweißelektroden verschwenkt werden können, um gekrümmten Oberflächen von Fügepartnern gerecht zu werden. Außerdem sind parallel zueinander angeordnete Schweißelektroden bekannt, die mittels einer Federkraft beaufschlagt werden. Schließlich sind parallel zueinander angeordnete Schweißelektroden bekannt, auf die mittels Kugeln eine Elektrodenkraft übertragbar ist. Beispiele für solche Verfahren und oder Vorrichtungen zeigen die DE 2 263 068 A1, die DE 602 12 943 T2, die DE 10 2007 063 432 A1, die EP 1 844 889 A1, die DD 216 662 A1 sowie die US 5,285,043.

Aus der JP H10-230370 A, der US1189584 A, der EP0037391 A sowie der DE29614518 U ist bereits ein Widerstandsschweißen bekannt, mit
- einem Elektrodenpaar, mittels dem eine Elektrodenkraft und ein elektrischer Schweißstrom in die Bauteile einleitbar sind;
- zumindest einem weiteren Elektrodenpaar, mittels dem eine weitere Elektrodenkraft und ein weitere elektrischer Schweißstrom in die Bauteile einleitbar sind
- einer Kraftquelle, mittels der die Elektrodenkräfte erzeugbar sind
- einem mechanisch zwischen die Kraftquelle und die Elektrodenpaare geschalteten Koppelgelenk, mittels dem eine von der Kraftquelle erzeugbare Gesamtelektrodenkraft in die Elektrodenkraft und die weitere Elektrodenkraft aufteilbar ist
- wobei das Elektrodenpaar eine bewegte Schweißelektrode und das weitere Elektrodenpaar eine weitere bewegte Schweißelektrode aufweist.

Aufgabe der Erfindung ist es, eine Elektrodenkraft bei einem Mehrpunktschweißen exakter einzustellen, insbesondere für jede einzelne Elektrode eine identische Elektrodenkraft bereitzustellen, insbesondere eine alternative Lösung anzugeben.

Die Aufgabe ist durch eine Schweißvorrichtung gemäß Anspruch 1 gelöst.

Vorteilhaft kann mittels des Koppelgelenks besonders exakt die Gesamtelektrodenkraft in die einzelnen Elektrodenkräfte aufgeteilt werden. Vorteilhaft muss nur eine einzelne Kraftquelle vorgesehen sein, so dass die Schweißvorrichtung insgesamt kleiner baut.

Vorteilhaft sind die Schweißelektroden längsverschieblich gelagert, wobei diese mittels der Längsverschieblichkeit an die Fügepartner zum Übertragen des Schweißstroms angenähert und/oder mittels der Elektrodenkräfte dort angelegt und angepresst werden können. Dabei ist die bewegte Schweißelektrode mittels einer Linearführung längsverschieblich und die weitere bewegte Schweißelektrode mittels einer weiteren Linearführung längsverschieblich gelagert. Die bewegten Schweißelektroden sind somit in Bezug zueinander achsparallel längsverschieblich gelagert. Die eine Schweißelektrode kann somit achsparallel längsverschieblich zur anderen Schweißelektrode verschoben werden.

Ein Ausführungsbeispiel der Schweißvorrichtung ist gemäß Anspruch 2 ausgeführt.

Vorteilhaft kann die lineare Kraftquelle mittels einer Linearbewegung eine Kraft erzeugen, die mittels des Koppelgelenks in Drehbewegungen und wieder zurück in Linearbewegungen zum Erzeugen der einzelnen Elektrodenkräfte wandelbar ist.

Ein weiteres Ausführungsbeispiel der Schweißvorrichtung ist gemäß Anspruch 3 ausgeführt.

Vorteilhaft kann mittels des Verteilerlenkers eine Aufteilung der Gesamtelektrodenkraft erfolgen. Dazu kann der Verteilerlenker Kippbewegungen bzw. Schwenkbewegungen um das Verteilergelenk herum ausführen, wobei vorteilhaft Tolleranzen und/oder unterschiedliche Materialdicken von Fügepartnern ausgeglichen werden können.

In einem weiteren Ausführungsbeispiel der Schweißvorrichtung können vorteilhaft über die bewegten Schweißelektroden die Elektrodenkräfte auf Fügepartner übertragen werden.

Ein Ausführungsbeispiel der Schweißvorrichtung ist gemäß Anspruch 5 ausgeführt.

Vorteilhaft können mittels den Kraftübertragungslenkern Ersatzbewegungen des Verteilerlenkers in einer Querrichtung der Elektrodenpaare, die aufgrund von Verschwenkbewegungen des Verteilerlenkers herrühren, ausgeglichen werden. Entsprechende Lagerkräfte können vorteilhaft mittels der Linearführungen aufgenommen werden.

Ein Ausführungsbeispiel der Schweißvorrichtung ist gemäß Anspruch 6 ausgeführt.

Vorteilhaft kann mittels den Kraftübertragungslenkern und den Gelenken die jeweilige Elektrodenkraft übertragen werden, wobei vorteilhaft ein Ausgleich in einer Querrichtung der Elektrodenpaare erfolgen kann.

Ein Ausführungsbeispiel der Schweißvorrichtung ist gemäß Anspruch 7 ausgeführt.

Vorteilhaft kann die von der Kraftquelle erzeugte Gesamtelektrodenkraft mittels deren Stange und mittels des Verteilergelenks auf den Verteilerlenker übertragen werden. Dieser teilt vorteilhaft die Gesamtelektrodenkraft auf die Elektrodenkräfte auf.

Ein Ausführungsbeispiel der Schweißvorrichtung ist gemäß Anspruch 8 ausgeführt.

Vorteilhaft kann aufgrund der mittigen Positionierung des Verteilergelenks eine exakt hälftige Aufteilung der Gesamtelektrodenkraft erfolgen, so dass vorteilhaft die einzelnen Elektrodenkräfte gleichgroß sind. Alternativ oder zusätzlich kann jedoch das Verteilergelenk in einer beliebigen Position bzw. Aufteilung zwischen den Gelenken des Verteilerlenkers angeordnet sein, wobei sich entsprechend Hebelgesetzen eine unterschiedliche Kraftaufteilung auf die Elektrodenpaare ergibt. Alternativ oder zusätzlich ist es möglich, eine Vielzahl von Verteilerlenkern vorzusehen, wobei eine beliebige Anzahl von Elektrodenpaaren vorgesehen werden kann, die jeweils eine Teilkraft der Gesamtelektrodenkraft empfangen. Für Zweierpotenzen kann das beschriebene Prinzip vervielfältigt werden. Für Zwischengrößen können Verteilerlenker vorgesehen sein, denen nur ein Elektrodenpaar zugeordnet ist, wobei eine Seite eines solchen Verteilerlenkers dem jeweiligen Elektrodenpaar zugeordnet ist und eine andere Seite kraftausgangsseitig mit der Kraftquelle mitbeweglich drehbar gelagert ist. Vorteilhaft kann dadurch eine Kraftabschwächung und/oder Kraftverstärkung erfolgen. Vorteilhaft kann dadurch eine Vielzahl von einzelnen Elektrodenkräften eingestellt und auf entsprechende Elektrodenpaare verteilt werden. Vorteilhaft arbeiten Koppelgelenk verlustarm und sind einfach auszulegen. Außerdem benötigen diese einen vergleichsweise geringen Raumbedarf.

Die Aufgabe ist außerdem durch ein Verfahren gemäß Anspruch 9 gelöst. Das Verfahren wird insbesondere mittels einer vorab beschriebenen Schweißvorrichtung durchgeführt. Es ergeben sich die vorab beschriebenen Vorteile.

Weitere Vorteile, Merkmale und Einzelheiten der Erfindung ergeben sich aus der nachfolgenden Beschreibung, in der mit Bezug auf die Zeichnung Ausführungsbeispiele im Einzelnen beschrieben sind. Gleiche, ähnliche und/oder funktionsgleiche Teile sind mit gleichen Bezugszeichen versehen. Es zeigen:
- Fig. 1: Eine dreidimensionale Ansicht von schräg vorne oben einer zwei Elektrodenpaare aufweisenden Schweißvorrichtung;
- Fig. 2: Eine dreidimensionale Ansicht von schräg vorne oben auf ein Koppelgelenk der in Fig. 1 gezeigten Schweißvorrichtung;
- Fig. 3: Ein Stromlaufplan eines Doppelinverters zum Aufteilen eines Schweißstroms auf die Schweißelektrodenpaare der in den Fig. 1 und 2 gezeigten Schweißvorrichtung.

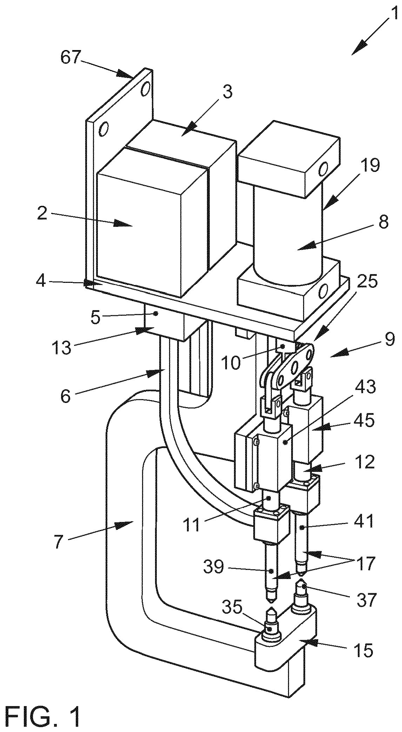

Fig. 1 zeigt eine dreidimensionale Ansicht von schräg vorne oben eines C-Bügels 7 einer Schweißvorrichtung 1. Die Schweißvorrichtung 1 weist ein Elektrodenpaar 15 und ein weiteres Elektrodenpaar 17 auf. Zwischen die Elektrodenpaare 15, 17 können zwei oder mehr Fügepartner positioniert werden. Mittels einer Kraftquelle 19 wird auf die Elektrodenpaare 15 und 17 eine Gesamtelektrodenkraft 27 ausgeübt. Damit werden die Fügepartner vorläufig zwischen den Elektrodenpaaren 15, 17 fixiert und so zusammengepresst, dass zwei von einem Schweißtransformator 2 und einem weiteren Schweißtransformator 3 gelieferte Schweißströme das Material der Fügepartner zumindest bereichsweise aufschmelzen und dadurch die Fügepartner mittels eines Widerstandsschweißens an zwei Fügestellen fügen.

Die Schweißtransformatoren 2 und 3 sind mittels Sekundärstromkabel 6 an bewegte Schweißelektroden 39, 41 der Schweißelektrodenpaare 15, 17 angeschlossen. Der Stromrückfluss erfolgt über feste Schweißelektroden 35, 37 der Elektrodenpaare 15, 17 und schließlich über den C-Bügel 7 zurück zu den Schweißtransformatoren 2 und 3.

Die bewegte Schweißelektrode 39 ist mittels einer Linearführung 43 längsverschieblich gelagert. Die weitere bewegte Schweißelektrode 41 ist mittels einer weiteren Linearführung 45 längsverschieblich gelagert, insbesondere sind die bewegten Schweißelektroden 39 und 41 achsparallel längsverschieblich gelagert.

Die Kraftquelle 19, die insbesondere als Pneumatikzylinder ausgeführt ist, überträgt die Gesamtelektrodenkraft 27 über eine Stange 10 auf ein vorteilhaftes Koppelgelenk 25. Mittels des Koppelgelenks 25 wird die Gesamtelektrodenkraft 27 auf die Elektrodenkräfte 21 und 23 aufgeteilt. Zum weiteren Übertragen sind die bewegten Elektroden 39 und 41 mittels Gleitwellen 11 und 12 in den Linearführungen 43 und 45 längsverschieblich gelagert.

Zum Ermitteln des Schweißstroms ist in den Schweißstromkreisen je Elektrodenpaar jeweils eine Strommessspule 13 geschaltet.

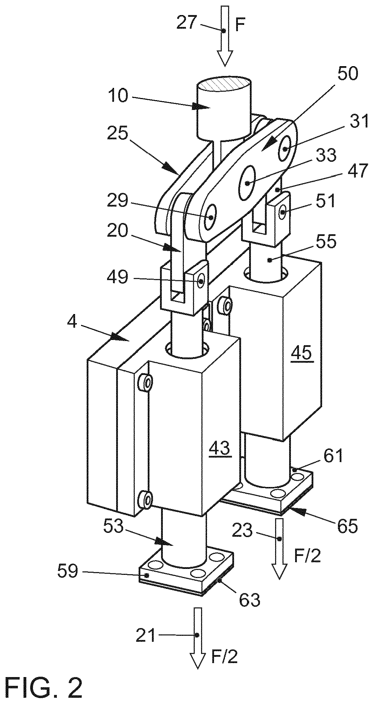

Fig. 2 zeigt eine Detaildarstellung der in Fig. 1 gezeigten Schweißvorrichtung, ebenfalls in einer dreidimensionalen Ansicht von schräg vorne oben, wobei das Koppelgelenk 25 und die Linearführungen 43 und 45 gezeigt sind.

Im Folgendem wir das Zusammenwirken des Koppelgelenks 25 mit den Linearführungen 43 und 45 und damit die Aufteilung der Gesamtelektrodenkraft 27 in die Elektrodenkraft 21 des Elektrodenpaares 15 und die weitere Elektrodenkraft 23 des weiteren Elektrodenpaares 17 näher erläutert.

Das Koppelgelenk 25 umfasst einen Verteilerlenker 50, der mittels eines Verteilergelenks 33 an der Stange 10 angelenkt ist. Der Verteilerlenker 50 weist beidseitig des Verteilergelenks 33 weitere Gelenke, nämlich ein Gelenk 29 und ein weiteres Gelenk 31 auf. Mittels des Gelenks 29 ist ein Kraftübertragungslenker 20 an dem Verteilerlenker 50 angelenkt. Mittels des weiteren Gelenks 31 ist ein weiterer Kraftübertragungslenker 47 an dem Verteilerlenker 50 angelenkt.

Das Übertragen der Gesamtelektrodenkraft 27 der Kraftquelle 19 erfolgt über die Stange 10, die beispielsweise als Kolbenstange eines Pneumatikzylinders ausgeführt ist..

Der Verteilerlenker 50 erfüllt die Funktion einer Ausgleichswippe und/oder eines Kipphebels.

Die Kraftübertragungslenker 20, 47 dienen zum Übertragen der Elektrodenkraft 21 auf das Elektrodenpaar 15 und der weiteren Elektrodenkraft 23 auf das weitere Elektrodenpaar 17. Dazu ist der Kraftübertragungslenker 20 mittels eines Kraftübertragungsgelenks 49 an der Gleitwelle 53 des Elektrodenpaares 15 angelenkt. Zum Übertragen der weiteren Elektrodenkraft 23 ist der weitere Kraftübertragungslenker 47 mittels eines weiteren Verteilergelenks 51 an der weiteren Gleitwelle 55 der weiteren Linearführung 45 des weiteren Elektrodenpaares 17 angelenkt.

Zum Übertragen der Elektrodenkräfte 21 und 23 auf die bewegte Schweißelektrode 39 und die weitere bewegte Schweißelektrode 41 weist jede der Gleitwellen 53 und 55 an einem den Kraftübertragungsgelenken 49 und 51 gegenüberliegenden Ende jeweils eine Elektrodenhalteraufnahme 59 bzw. weitere Elektrodenhalteraufnahme 61 auf. In Wirkrichtung der Elektrodenkraft 21 ist unterhalb der Elektrodenhalter 59 ein elektrischer Isolator 63 angeordnet. Ebenso ist unterhalb der weiteren Elektrodenhalteraufnahme 61 ein weiterer elektrischer Isolator 65 angeordnet. Damit kann ein Nebenschluss über den Ausgleichsmechanismus vermieden werden. Die Elektrodenhalteraufnahmen 59, 61 weisen jeweils 4 Durchgangslöcher auf, mittels denen eine Verbindung zwischen der jeweiligen Gleitwelle 53, 55 und der jeweiligen bewegten Schweißelektrode 39 und 41 herstellbar ist.

In einer weiteren Ausführungsform sind die zwei Stromkreise elektrisch voneinander getrennt, um einen Nebenschluss zu vermeiden.

Gemäß eines Ausführungsbeispiels ist die Kraftquelle 19 als Pneumatikvorrichtung ausgeführt und weist dazu einen Pneumatikzylinder 8 auf.

Das Koppelgelenk 25 stellt eine Kraftwegausgleichsvorrichtung 9 dar und wandelt eine Linearbewegung der Stange 10 des Pneumatikzylinders 8 zunächst in Schwenk- bzw. Drehbewegungen des Verteilerlenkers 50 und der Kraftübertragungslenker 20, 47 um. Diese Schwenk- und Drehbewegungen werden wieder zurückgewandelt in Linearbewegungen der Gleitwellen 53 und 55. Vorteilhaft wird so die Gesamtelektrodenkraft 27 in die einzelnen Elektrodenkräfte 21 und 23 aufgeteilt. Vorteilhaft erfolgt aufgrund der Schwenkbewegung des Verteilerlenkers 50 dadurch ein Tolleranzausgleich in einer Längsrichtung der Linearführung 43 und 45. Vorteilhaft erfolgt trotz dieses Tolleranzausgleiches aufgrund der Kinematik des Koppelgelenks 25 stets eine identische Aufteilung der Gesamtelektrodenkraft 27. Dies ist vorteilhaft nicht von einer Schwenklage des Verteilerlenkers 50 abhängig sondern lediglich von einer Position des Verteilergelenks 33 relativ zu den Gelenken 29 und 31. Bei einem Ausführungsbeispiel ist das Verteilergelenk 50 exakt mittig zwischen den Gelenken 29 und 31 angeordnet, so dass die Elektrodenkräfte 21 und 33 identisch sind. Vorteilhaft ist das Koppelgelenk 25 symmetrisch aufgebaut, so dass sich selbst die Lagerkräfte, die in den Linearführungen 43 und 45 sowie in den Gelenken 29, 31, 49, 51 auftreten, ebenfalls kompensieren.

Für eine abweichende Kraftverteilung ist es möglich, das Verteilergelenk 33 des Verteilerlenkers 50 in einer asymmetrischen Aufteilung zwischen den Gelenken 29 und 31 anzuordnen. Außerdem ist es denkbar, das Prinzip des Koppelgelenks 25 auf mehr als zwei Elektroden zu übertragen. Dabei können für zweier Potenzen jeweils symmetrisch aufgebaute Koppelgelenk vorgesehen sein. Für davon abweichende Anzahlen können asymmetrische Koppelgelenk vorgesehen sein, wobei entsprechende Verteilerlenker ggf. einseitig fest angelenkt sind.

Die Linearführung 43 und 45 sind mit einem Zangengrundkörper 4 verschraubt.

Zum Zuordnen des C-Bügels 7 der Schweißvorrichtung 1 einer Robotervorrichtung, weist diese eine Roboterbefestigungsplatte 67, die insbesondere Verschraubungen bzw. Durchgangslöcher aufweist, mittels denen Verschraubungen zu der Robotervorrichtung herstellbar sind, auf.

Zum Wandeln des Schweißstroms ist außer der Strommessspule 13 auch ein Diodenpaket 5 vorgesehen.

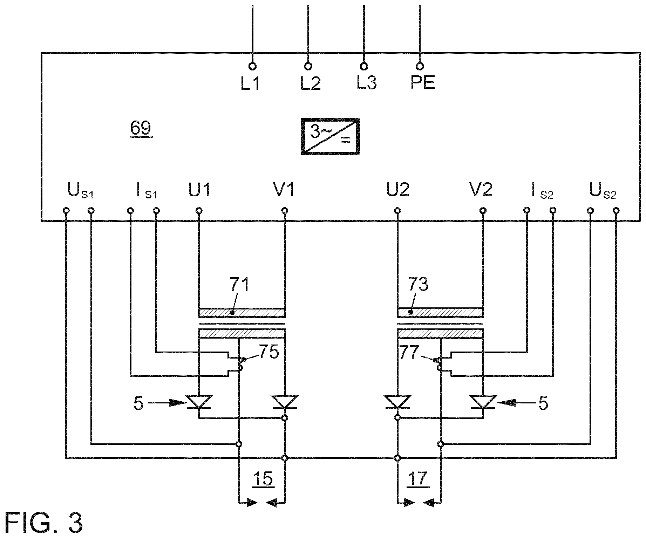

Fig. 3 zeigt einen Stromlaufplan eines Doppelinverters 69.

Mittels Buchstaben L1, L2, L3 und PE ist in Fig. 3 ein Anschluss an ein Stromnetz, insbesondere an einen Starkstromanschluss symbolisiert.

Der Doppelinverter 69 dient zum Erzeugen eines elektrischen Schweißstromes I_{S1} und eines weiteren elektrischen Schweißstromes I_{S2}. Entsprechende Messleitungen für die Schweißströme I_{S1} und I_{S2} sind in Fig. 3 eingezeichnet.

Für jedes Elektrodenpaar 15, 17 ist ein Primärkreis U1, V1 und U2, V2 vorgesehen. Spannungen der Primärkreise U1 und V1, U2 und V2 werden mittels eines Transformators 71 und eines weiteren Transformators 73 transformiert. Jedem der Transformatoren 71, 73 ist eines der Diodenpakete 5 nachgeschaltet.

Zum Messen einer Sekundärspannung U_{S1} und U_{S2} sind jedem der Elektrodenpaare 15, 17 bzw. deren Stromkreise entsprechende Messleitungen zugeordnet.

Vorteilhaft können je Arbeitsgang und/oder Anfahrposition zwei oder mehr Schweißpunkte erzeugt werden. Vorteilhaft kann dadurch eine Fertigungszeit deutlich verkürzt werden. Vorteilhaft ist dennoch pro Schweißpunkt eine definierte Elektrodenkraft 21 und 23 möglich. Vorteilhaft kann so trotz der mehrfachen Setzung von Schweißpunkten eine hohe Güte und Prozesssicherheit der Verschweißung sichergestellt werden. Vorteilhaft stellt das Koppelgelenk 25 bzw. die Kraftwegausgleichsvorrichtung 9 einen verschleißarmen und funktionellen Mechanismus dar, der vorteilhaft im Vergleich zu zwei einzeln vorgesehenen Kraftquellen vergleichsweise klein baut und wartungsarm ist. Vorteilhaft können die einzelnen Elektrodenkräfte 21 und 23 im Bereich zwischen 2 und 5 kN, insbesondere zwischen 2,5 und 3,5, insbesondere, ungefähr 2,5 bis 3 kN erreichen.

Vorteilhaft liegt die Prozesssicherheit auf dem Niveau einer Schweißzange mit lediglich einem Schweißpunkt.

Gemäß den Figuren 1 und 2 ist die Schweißvorrichtung 1 in C-Bauweise ausgeführt und weist dazu den C-Bügel 7 auf. Gemäß eines vorteilhaften weiteren Aspekts der Erfindung kann jedoch die Schweißvorrichtung 1 auch in X-Bauweise, mit einer sogenannten X-förmigen Schweißzange ausgeführt sein. Dazu kann das Koppelgelenk 25 an einem Zangenende analog der Darstellung der Fig. 1 und 2 vorgesehen sein. Eine Übertragung von der Kraftquelle erfolgt dann ggf. über die X-förmige Zange und nicht direkt über die Stange 10 der Kraftquelle 19. Alternativ oder zusätzlich kann die Kraftquelle 19 auf eine beliebige Art und Weise ausgeführt sein, insbesondere als hydraulische Kraftquelle, elektromotorische Kraftquelle und/oder ähnliches.

An Zangenarmen der Schweißvorrichtung 1 sind jeweils die festen Schweißelektroden 35, 37 und die bewegten Schweißelektroden 39 und 41 der Elektrodenpaare 15, 17 so angebracht, dass sich mit dem Schließen der Zange der Schweißvorrichtung 1 die zwei Stromkreise über zu verschweißende Bauteile bzw. die Fügepartner ergeben. Erfindungsgemäß handelt es sich um zwei voneinander unabhängige regelbare Stromkreise, insbesondere mittels des in Fig. 3 dargestellten Doppelinverters 69, mit separat angesteuerten Transformatoren 71 und 73. Eine Regelung erfolgt dabei über eine Strommessspule 75 des Elektrodenpaars 15 und eine weitere Strommessspule 77 des weiteren Elektrodenpaars 17, was in Fig. 3 dargestellt ist.

Die Schweißzange der Schweißvorrichtung 1 ist mit dem Koppelgelenk 25 der Kraftwegausgleichsvorrichtung 9 ausgestattet, mit dem die von der Zange und/oder Kraftquelle 19 erzeugte Gesamtelektrodenkraft 27 unabhängig von einer Elektrodenposition insbesondere einer tatsächlichen Dicke der Fügepartner im Bereich der jeweiligen Schweißelektrode in einem Verhältnis, vorliegend insbesondere in einem Verhältnis 0,5 : 0,5, auf beide Elektrodenpaare 15, 17 verteilt wird.

So sind vorteilhaft reproduzierbare Schweißergebnisse gewährleistet. Durch die Linearführungen 43, 45 wird zusätzlich ein Wegausgleich zur Kompensation unterschiedlicher Fräsabträge und/oder unterschiedlicher Gesamtblechdicken generiert. Die Linearführungen 43, 45 können als Gleitlager mit Wellen und/oder Gleitschienen mit Linearkugellagereinheiten oder als Kombination aus beiden ausgeführt sein. Der Ausgleich realisiert insbesondere bis zu 20mm an vertikalem Versatz. Vorteilhaft können Kappenpaare der Elektrodenpaare 15, 17 hintereinander mit herkömmlichen Fräsern bearbeitet werden. Alternativ oder zusätzlich ist ein Einsatz von Doppelfräsern denkbar.

Ein entscheidender Vorteil des Koppelgelenks 25 der Kraftwegausgleichsvorrichtung 9 gegenüber parallel ausgerichteten Pneumatikzylindern und/oder Servomotoren ist der geringere Platzbedarf. Vorteilhaft wird dadurch eine Konstruktionsfreiheit für Fügebetriebsmittel in einer Produktionsvorrichtung deutlich erhöht. Ein Abstand zwischen den Elektrodenpaaren 15, 17 bzw. den Linearführungen 43 und 45 beträgt insbesondere zwischen 20 mm und 300 mm insbesondere zwischen 40 mm und 200 mm, insbesondere zwischen 50 mm und 180 mm, insbesondere zwischen 70 mm und 150 mm, insbesondere zwischen 90 mm und 100 mm. Bei einem Elektrodenabstand von beispielsweise 100 mm können durch sogenanntes auf Lücke schweißen Punktabstände von 50 mm, 33 mm, 25 mm oder 20 mm realisiert werden. Dementsprechend wird der Elektrodenabstand mittels einem, zwei, drei oder vier zwischen gefügten Schweißpunkten in zwei, drei, vier oder fünf Einzelabstände unterteilt.

Die beschriebene Schweißvorrichtung 1, insbesondere Roboterschweißzange, kann ebenfalls mit einem pneumatischen oder servomotorischen Zangenausgleich ausgestattet sein. Gemäß eines weiteren Aspekts wird insbesondere eine Bewegung eines festen Elektrodenarms zu den Fügepartnern über eine Roboterbewegung, insbesondere eine 7-Achsfunktion realisiert.

**Bezugszeichenliste**

| | | | |
|---|---|---|---|
| 1 | Schweißvorrichtung | 63 | Isolator |
| 2 | Schweißtransformator | 65 | Isolator |
| 3 | Schweißtransformator | 67 | Roboterbefestigungsplatte |
| 5 | Diodenpaket | 69 | Doppelinverter |
| 6 | Sekundärstromkabel | 71 | Transformators |
| 7 | C-Bügel | 73 | Transformators |
| 8 | Pneumatikzylinder | 75 | Strommessspule |
| 9 | Kraftwegausgleichsvorrichtung | 77 | Strommessspule |
| 10 | Stange | | |
| 13 | Strommessspule | | |
| 15 | Elektrodenpaar | | |
| 17 | Elektrodenpaar | | |
| 19 | Kraftquelle | | |
| 20 | Kraftübertragungslenker | | |
| 21 | Elektrodenkraft | | |
| 23 | Elektrodenkraft | | |
| 25 | Koppelgelenk | | |
| 27 | Gesamtelektrodenkraft | | |
| 29 | Gelenk | | |
| 31 | Gelenk | | |
| 33 | Verteilergelenk | | |
| 35 | Schweißelektrode | | |
| 37 | Schweißelektrode | | |
| 39 | Schweißelektrode | | |
| 41 | Schweißelektrode | | |
| 43 | Linearführung | | |
| 45 | Linearführung | | |
| 47 | Kraftübertragungslenker | | |
| 49 | Kraftübertragungsgelenk | | |
| 50 | Verteilerlenker | | |
| 51 | Kraftübertragungsgelenk | | |
| 53 | Gleitwelle | | |
| 55 | Gleitwelle | | |
| 59 | Elektrodenhalteraufnahme | | |
| 61 | Elektrodenhalteraufnahme | | |

## Patentansprüche

1. Schweißvorrichtung (1) zum Fügen von Bauteilen mittels eines Widerstandsschweißens, mit:
- einem Elektrodenpaar (15,17), mittels dem eine Elektrodenkraft (21) und ein elektrischer Schweißstrom I_{S1} in die Bauteile einleitbar sind,
- zumindest einem weiteren Elektrodenpaar (15,17), mittels dem eine weitere Elektrodenkraft (23) und ein weitere elektrischer Schweißstrom I_{S2} in die Bauteile einleitbar sind,
- einer Kraftquelle (19), mittels der die Elektrodenkräfte (21, 23) erzeugbar sind,
- einem mechanisch zwischen die Kraftquelle (19) und die Elektrodenpaare (15, 17) geschalteten Koppelgelenk (25), mittels dem eine von der Kraftquelle (19) erzeugbare Gesamtelektrodenkraft (27) in die Elektrodenkraft (21) und die weitere Elektrodenkraft (23) aufteilbar ist.
- wobei das eine Elektrodenpaar (15,17) eine bewegte Schweißelektrode (39) und das zumindest weitere Elektrodenpaar (15,17) eine weitere bewegte Schweißelektrode (41) aufweist und
die bewegte Schweißelektrode (39) mittels einer Linearführung (43) längsverschieblich und die weitere bewegte Schweißelektrode (41) mittels einer weiteren Linearführung (45) längsverschieblich gelagert sind, **dadurch gekennzeichnet, dass** einem Elektrodenpaar (15,17) ein Schweißtransformator (71) und dem weiteren Elektrodenpaar (17, 15) ein Schweißtransformator (73) zugeordnet ist, sodass die zwei von den Schweißtransformatoren (2, 3) gelieferten Schweißströme (I_{S1},I_{S2}) die Fügepartner an zwei Fügestellen mittels des Widerstandsschweißens fügen, und zum Regeln der Schweißströme (I_{S1}, I_{S2}) in den Schweißstromkreisen je Elektrodenpaar (15,17) jeweils eine Strommessspule (75, 77) geschaltet ist, und die zwei Stromkreise über die zu verschweißenden Fügepartner und die jeweiligen Elektrodenpaare (15,17) voneinander unabhängig regelbare Stromkreise mit den separat angesteuerten Transformatoren (71, 73) sind.

2. Schweißvorrichtung nach dem vorhergehenden Anspruch, wobei die Kraftquelle (19) als lineare Kraftquelle ausgebildet ist.

3. Schweißvorrichtung nach einem der vorhergehenden Ansprüche, wobei das Koppelgelenk (25) einen Verteilerlenker (50) aufweist, der mittels eines Gelenks (29) dem Elektrodenpaar (15,17), eines weiteren Gelenks (31) dem weiteren Elektrodenpaar (15,17) und eines zwischen dem Gelenk (29) und dem weiteren Gelenk (31) angeordneten Verteilergelenks (33) der Kraftquelle (19) jeweils mechanisch zugeordnet ist.

4. Schweißvorrichtung nach einem der vorhergehenden Ansprüche, wobei das Elektrodenpaar (15,17) eine feste Schweißelektrode (35) und eine bewegte Schweißelektrode (39) und das weitere Elektrodenpaar (15,17) eine weitere feste Schweißelektrode (37) und eine weitere bewegte Schweißelektrode (41) aufweisen.

5. Schweißvorrichtung nach einem der vorhergehenden Ansprüchen, wobei das Koppelgelenk (25) einen dem Elektrodenpaar (15,17) mechanisch zugeordneten Kraftübertragungslenker (20) und einen dem weiteren Elektrodenpaar (15,17) mechanisch zugeordneten weiteren Kraftübertragungslenker (47) aufweist, mittels denen die Elektrodenkräfte (21, 23) übertragbar sind.

6. Schweißvorrichtung nach dem vorhergehenden Anspruch, wobei der Kraftübertragungslenker (20) mittels des Gelenks (29) an dem Verteilerlenker (5) und mittels eines Kraftübertragungsgelenks (49) an der bewegten Schweißelektrode (39) des Elektrodenpaares (15,17) angelenkt ist und wobei der weitere Kraftübertragungslenker (47) mittels des weiteren Gelenks (31) an den Verteilerlenker (50) und mittels eines weiteren Kraftübertragungsgelenks (51) an der weiteren bewegten Schweißelektrode (41) des weiteren Elektrodenpaares (15,17) angelenkt ist.

7. Schweißvorrichtung nach dem vorhergehenden Anspruch, wobei eine längsverschiebliche Stange (10) der Kraftquelle (19), mittels der die Gesamtelektrodenkraft (27) übertragbar ist, mittels des Verteilergelenks (33) an dem Verteilerlenker (50) angelenkt ist.

8. Schweißvorrichtung nach einem der vorhergehenden Ansprüche, wobei das Verteilergelenk (33) mittig zwischen den Gelenken (29, 31) des Verteilerlenkers (5) angeordnet ist.

9. Verfahren zum Fügen von Bauteilen mittels eines Widerstandsschweißen mit:
- Erzeugen einer Gesamtelektrodenkraft (27),
- Verteilen der Gesamtelektrodenkraft (27) auf ein Elektrodenpaar (15,17) und ein weiteres Elektrodenpaar (15,17) mittels eines Koppelgelenks (25) und dadurch aneinander Pressen der zwischen den Elektrodenpaaren (15,17) angeordneten Bauteile,
- Einleiten eines Schweißstroms (I_{S1}) und eines weiteren Schweißstroms (I_{S2}) in die Bauteile über die Elektrodenpaare (15, 17) zum Verschweißen der Bauteile mittels des Widerstandsschweißens,
**dadurch gekennzeichnet, dass**
der Schweißstrom (I_{S1}) und der weitere Schweißstrom (I_{S2}) unabhängig voneinander geregelt werden.

## Claims

1. Welding device (1) for joining components by means of resistance welding, having:
- an electrode pair (15, 17) by means of which an electrode force (21) and an electrical welding current I_{S1} can be introduced into the components,
- at least one further electrode pair (15, 17) by means of which a further electrode force (23) and a further electrical welding current I_{S2} can be introduced into the components,
- a power source (19) by means of which the electrode forces (21, 23) can be generated,
- a coupling joint (25) which is connected mechanically between the power source (19) and the electrode pairs (15, 17) and by means of which a total electrode force (27) that can be generated by the power source (19) can be divided up into the electrode force (21) and the further electrode force (23).
- wherein the one electrode pair (15, 17) has a moving welding electrode (39), and the at least further electrode pair (15, 17) has a further moving welding electrode (41), and the moving welding electrode (39) is mounted so as to be longitudinally displaceable by means of a linear guide (43), and the further moving welding electrode (41) is mounted so as to be longitudinally displaceable by means of a further linear guide (45), **characterized in that** a welding transformer (71) is associated with an electrode pair (15, 17), and a welding transformer (73) is associated with the further electrode pair (17, 15), so that the two welding currents (I_{S1}, I_{S2}) supplied by the welding transformers (2, 3) join the joining partners at two joining locations by means of resistance welding; and a respective current measuring coil (75, 77) is connected per electrode pair (15, 17) to regulate the welding currents (I_{S1}, I_{S2}) in the welding current circuits; and the two circuits via the joining partners to be welded and the respective electrode pairs (15, 17) are independently controllable circuits with the separately controlled transformers (71, 73).

2. Welding device according to the preceding claim, wherein the power source (19) is designed as a linear power source.

3. Welding device according to any one of the preceding claims, wherein the coupling joint (25) has a distributor arm (50) that is respectively mechanically associated with the electrode pair (15, 17) by means of a joint (29), with the further electrode pair (15, 17) by means of a further joint (31), and with the power source (19) by means of a distributor joint (33) arranged between the joint (29) and the further joint (31).

4. Welding device according to any one of the preceding claims, wherein the electrode pair (15, 17) has a fixed welding electrode (35) and a moving welding electrode (39), and the further electrode pair (15, 17) has a further fixed welding electrode (37) and a further moving welding electrode (41).

5. Welding device according to any one of the preceding claims, wherein the coupling joint (25) has a power transmission link (20) mechanically associated with the electrode pair (15, 17) and has a further power transmission link (47) mechanically associated with the further electrode pair (15, 17), by means of which links the electrode forces (21, 23) can be transmitted.

6. Welding device according to the preceding claim, wherein the power transmission link (20) is coupled by means of the joint (29) to the distributor arm (5) and by means of a power transmission link (49) to the moving welding electrode (39) of the electrode pair (15, 17); and wherein the further power transmission link (47) is coupled by means of the further joint (31) to the distributor arm (50) and by means of a further power transmission link (51) to the further moving welding electrode (41) of the further electrode pair (15, 17).

7. Welding device according to the preceding claim, wherein a longitudinally displaceable rod (10) of the power source (19), by means of which the total electrode force (27) can be transmitted, is coupled by means of the distributor joint (33) to the distributor arm (50).

8. Welding device according to any one of the preceding claims, wherein the distributor joint (33) is arranged centrally between the joints (29, 31) of the distributor arm (5).

9. Method for joining components by means of resistance welding, comprising:
- generating a total electrode force (27),
- distributing the total electrode force (27) to an electrode pair (15, 17) and a further electrode pair (15, 17) by means of a coupling joint (25), and thereby pressing together the components arranged between the electrode pairs (15, 17),
- introducing a welding current (I_{S1}) and a further welding current (I_{S2}) into the components via the electrode pairs (15, 17) for welding the components by means of resistance welding, **characterized in that** the welding current (I_{S1}) and the further welding current (I_{S2}) are regulated independently of one another.

## Revendications

1. Dispositif de soudage (1) destiné à l'assemblage de pièces par soudage par résistance, comportant :
- une paire d'électrodes (15, 17), au moyen de laquelle une force de soudage (21) et un courant électrique de soudage I_{S1} peuvent être introduits dans les pièces,
- au moins une autre paire d'électrodes (15, 17), au moyen de laquelle une autre force de soudage (23) et un autre courant électrique de soudage I_{S2} peuvent être introduits dans les pièces,
- une source d'énergie (19), au moyen de laquelle les forces de soudage (21, 23) peuvent être générées,
- une articulation de couplage (25) montée mécaniquement entre la source d'énergie (19) et les paires d'électrodes (15, 17), au moyen de laquelle une force de soudage totale (27) pouvant être générée par la source d'énergie (19) peut être divisée en la force de soudage (21) et l'autre force de soudage (23).
- dans lequel ladite paire d'électrodes (15, 17) présente une électrode de soudage (39) mobile et l'au moins une autre paire d'électrodes (15, 17) présente une autre électrode de soudage (41) mobile et l'électrode de soudage (39) mobile est montée de manière déplaçable dans le sens de la longueur au moyen d'un guidage linéaire (43) et l'autre électrode de soudage (41) mobile est montée de manière déplaçable dans le sens de la longueur au moyen d'un autre guidage linéaire (45), **caractérisé en ce qu'**un transformateur de soudage (71) est associé à une paire d'électrodes (15, 17) et un transformateur de soudage (73) à l'autre paire d'électrodes (17, 15), de telle sorte que les deux courants de soudage (I_{S1}, I_{S2}) fournis par les transformateurs de soudage (2, 3) assemblent les éléments à assembler sur deux joints d'assemblage par soudage par résistance, et, pour réguler les courants de soudage (I_{S1}, I_{S2}), un tore de mesure de courant (75, 77) est respectivement branché dans les circuits de soudage pour chaque paire d'électrodes (15, 17) et les deux circuits de soudage sont des circuits pouvant être régulés indépendamment l'un de l'autre par le biais des éléments à assembler à souder et des paires d'électrodes (15, 17) respectives avec les transformateurs (71, 73) commandés séparément.

2. Dispositif de soudage selon la revendication précédente, dans lequel la source d'énergie (19) est réalisée sous la forme d'une source d'énergie linéaire.

3. Dispositif de soudage selon l'une quelconque des revendications précédentes, dans lequel l'articulation de couplage (25) présente une bielle de répartition (50), qui est associée de manière mécanique respectivement à la paire d'électrodes (15, 17) au moyen d'une articulation (29), à l'autre paire d'électrodes (15, 17) au moyen d'une autre articulation (31) et à la source d'énergie (19) au moyen d'une articulation de répartition (33) disposée entre l'articulation (29) et l'autre articulation (31).

4. Dispositif de soudage selon l'une quelconque des revendications précédentes, dans lequel la paire d'électrodes (15, 17) présente une électrode de soudage (35) fixe et une électrode de soudage (39) mobile et l'autre paire d'électrodes (15, 17) présente une autre électrode de soudage (37) fixe et une autre électrode de soudage (41) mobile.

5. Dispositif de soudage selon l'une quelconque des revendications précédentes, dans lequel l'articulation de couplage (25) présente une bielle de transmission de force (20) associée mécaniquement à la paire d'électrodes (15, 17) et une autre bielle de transmission de force (47) associée mécaniquement à l'autre paire d'électrodes (15, 17), au moyen desquelles les forces de soudage (21, 23) peuvent être transmises.

6. Dispositif de soudage selon la revendication précédente, dans lequel la bielle de transmission de force (20) est articulée sur la bielle de répartition (5) au moyen de l'articulation (29) et sur l'électrode de soudage (39) mobile de la paire d'électrodes (15, 17) au moyen d'une articulation de transmission de force (49) et dans lequel l'autre bielle de transmission de force (47) est articulée sur la bielle de répartition (50) au moyen de l'autre articulation (31) et sur l'autre électrode de soudage (41) mobile de l'autre paire d'électrodes (15, 17) au moyen d'une autre articulation de transmission de force (51).

7. Dispositif de soudage selon la revendication précédente, dans lequel une barre (10) déplaçable dans le sens de la longueur de la source d'énergie (19), au moyen de laquelle la force de soudage totale (27) peut être transmise, est articulée sur la bielle de répartition (50) au moyen de l'articulation de répartition (33).

8. Dispositif de soudage selon l'une quelconque des revendications précédentes, dans lequel l'articulation de répartition (33) est disposée au milieu entre les articulations (29, 31) de la bielle de répartition (5).

9. Procédé d'assemblage de pièces par soudage par résistance comportant :
- la génération d'une force de soudage totale (27),
- la répartition de la force de soudage totale (27) sur une paire d'électrodes (15, 17) et une autre paire d'électrodes (15, 17) au moyen d'une articulation de couplage (25) et ainsi la compression l'une contre l'autre des pièces disposées entre les paires d'électrodes (15, 17),
- l'introduction d'un courant de soudage (I_{S1}) et d'un autre courant de soudage (I_{S2}) dans les pièces par le biais des paires d'électrodes (15, 17) pour souder les pièces par soudage par résistance, **caractérisé en ce que** le courant de soudage (I_{S1}) et l'autre courant de soudage (I_{S2}) sont régulés indépendamment l'un de l'autre.
